# EUROPEAN PATENT APPLICATION

(11) **EP 3 889 346 A1**
(43) Date of publication of application: **06.10.2021**
(21) Application number: 21165454.6
(22) Date of filing: 29.03.2021
(51) Int. Cl.: D21F 9/00, C08L 3/02, D21H 17/28

(54) **COMPOSITE, MOLDED PRODUCT, AND METHOD FOR PRODUCING MOLDED PRODUCT**

(30) Priority: 30.03.2020 JP 2020059824
(71) Applicant: Seiko Epson Corporation, Tokyo 160-8801 (JP)
(72) Inventor: YOKOKAWA, Shinobu, Suwa-shi, Nagano 392-8502 (JP); TANAKA, Hideki, Suwa-shi, Nagano 392-8502 (JP); HIGUCHI, Naotaka, Suwa-shi, Nagano 392-8502 (JP); SEKI, Shunichi, Suwa-shi, Nagano 392-8502 (JP)
(74) Representative: Miller Sturt Kenyon

(57) **Abstract**

A composite of the present disclosure contains a fiber and a thermoplastic starch fused to the fiber. A method for producing a molded product of the present disclosure includes a molding raw material preparing step of preparing a molding raw material containing a fiber and a thermoplastic starch, and a molding step of molding the molding raw material into a predetermined shape by heating and pressurizing the molding raw material.

## Description

The present application is based on, and claims priority from JP Application Serial Number 2020-059824, filed March 30, 2020, the disclosure of which is hereby incorporated by reference herein in its entirety.

### BACKGROUND

### 1. Technical Field

The present disclosure relates to a composite, a molded product, and a method for producing a molded product.

### 2. Related Art

As a method for producing a sheet-shaped or film-shaped molded product using a fiber-shaped substance, there is a papermaking method using water.

In such a papermaking method, fibers are entangled with each other by using a bonding force such as a hydrogen bond between the fibers, and sufficient strength in the molded product is obtained through the bonding force.

However, in the papermaking method, it is necessary to use a large amount of water, and dehydration and drying are required during the production, so that energy and time consumption consumed for performing the papermaking method are very large. In addition, the water that has been used must be properly treated as water to be discharged. In addition, a device used in the papermaking method often requires large-scale utilities or infrastructures such as water, electric power, and water discharging facilities, and it is difficult to reduce sizes thereof.

Therefore, as a method that does not use a large amount of water as in the papermaking method of the related art, it is proposed that a method for producing a sheet by accumulating a mixture of dried fibers and a resin, and heating and pressurizing the accumulated mixture (for example, International Publication No. WO2018/043034).

In the method described in International Publication No. WO2018/043034, the strength of the sheet that is a molded product is ensured by using a resin such as a polyester resin for binding the fibers to each other.

In recent years, it is demanded to suppress the use of petroleum-derived materials in order to deal with environmental problems and saving of underground resources.

On the other hand, in the disclosure described in International Publication No. WO2018/043034, a synthetic resin is used for binding fibers.

In order to respond to the above demands, natural materials such as a material derived from a plant may be used, but in the disclosure described in International Publication No. WO2018/043034, sufficient binding force cannot be obtained when using the natural material instead of a synthetic resin, and it is difficult to make sheet strength sufficiently excellent. When a natural material is used instead of the synthetic resin, it is generally necessary to use a large amount of water, so that there is a problem that the consumption of heat energy in order to dry the water when the molded product is obtained increases. In addition, when a large amount of water is added, the natural material is easily denatured, so that the molded product is difficult to be recycled.

### SUMMARY

The present disclosure can be realized in the following aspects or application examples.

A composite according to this application example of the present disclosure contains a fiber and a thermoplastic starch fused to the fiber.

A molded product according to this application example of the present disclosure includes a composite according to the present disclosure.

A method for producing a molded product according to this application example of the present disclosure includes a molding raw material preparing step of preparing a molding raw material containing a fiber and a thermoplastic starch, and a molding step of molding the molding raw material into a predetermined shape by heating and pressurizing the molding raw material.

A method for producing a molded product according to this application example of the present disclosure includes a molding raw material preparing step of preparing a molding raw material containing a composite according to the present disclosure, and a molding step of molding the molding raw material into a predetermined shape by heating and pressurizing the molding raw material.

### BRIEF DESCRIPTION OF THE DRAWINGS

FIG. 1 is a schematic enlarged view illustrating a preferable embodiment of a composite of the present disclosure.
FIG. 2 is a schematic side view illustrating a preferable embodiment of a molded product producing device.

### DESCRIPTION OF EXEMPLARY EMBODIMENTS

Hereinafter, preferred embodiments of the present disclosure will be described in detail.

### 1. Composite

First, a composite of the present disclosure will be described.

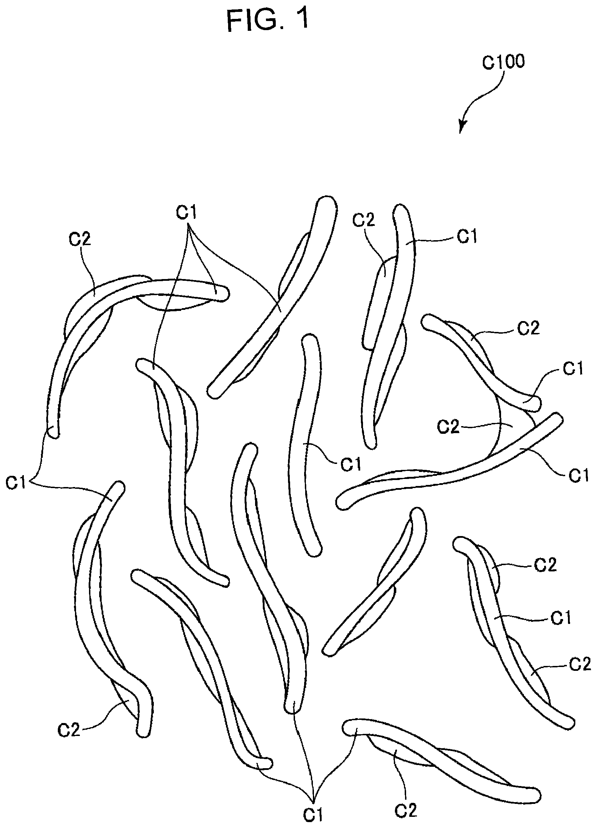

FIG. 1 is a schematic enlarged view illustrating a preferred embodiment of a composite of the present disclosure.

The composite C100 of the present disclosure contains a fiber C1 and a thermoplastic starch C2 fused to the fiber C1.

By using the composite C100, it is possible to suitably produce a molded product having a desired shape even with adding almost no moisture while suppressing the use of petroleum-derived materials. That is, a dry molding method can be suitably applied. Therefore, it is also advantageous from the viewpoints of productivity and production cost of the molded product, energy saving, miniaturization of the production facility of the molded product, and the like. Such the composite C100 and the molded product produced using the composite C100 are also excellent in biodegradability since the molded product is formed of starch. The molded product produced using the composite C100 can be easily recycled. In addition, the thermoplastic starch C2 has an excellent bonding force with the fiber C1, the strength of the molded product produced using the composite C100 can be made excellent, and the scattering of fibers C1 during the production of the molded product can be prevented more effectively.

### 1-1. Fiber

The composite C100 contains the fiber C1.

The fiber C1 is usually a main component of the molded product produced using the composite C100, is a component that greatly contributes to the maintenance of the shape of the molded product, and has a great influence on the properties such as the strength of the molded product.

The fiber C1 is preferably formed of a substance containing at least one chemical structure of a hydroxyl group, a carbonyl group, and an amino group.

Thereby, the hydrogen bond between the fiber C1 and the thermoplastic starch C2 described in detail later is likely to be formed, the bonding strength between the fiber C1 and the thermoplastic starch C2, an overall strength of the molded product produced using the composite C100, for example, the tensile strength of the sheet-shaped molded product and the like can be more excellent.

The fiber C1 may be a synthetic fiber formed of a synthetic resin such as polypropylene, polyester, or polyurethane, but is preferably a naturally-derived fiber, that is, a biomass-derived fiber, and more preferably a cellulose fiber.

Thereby, it is possible to more suitably deal with environmental problems and saving of underground resources.

In particular, when the fiber C1 is a cellulose fiber, the following effects can be obtained.

That is, cellulose is a natural material derived from plants and is an abundant resource. By using cellulose as fibers constituting the composite C100, it is possible to more suitably deal with environmental problems and saving of underground resources, and the composite is also available, and it is also preferable from the viewpoint of a stable supply of the composite C100 and the molded product produced using the composite C100, cost reduction, and the like. Cellulose fibers have a particularly high theoretical strength among various fibers, and are advantageous from the viewpoint of further improving the strength of the molded product.

Cellulose fibers are usually mainly constituted of cellulose, but may contain components other than cellulose. Examples of the component include hemicellulose, lignin, and the like.

Cellulose fibers that have been subjected to a treatment such as bleaching may be used.

The fiber C1 may be a fiber that has been treated by ultraviolet irradiation treatment, ozone treatment, plasma treatment, or the like. Thereby, hydrophilicity of the fiber C1 can be increased, and affinity with the thermoplastic starch C2 can be increased. More specifically, by performing these treatments, a functional group such as a hydroxyl group can be introduced on surfaces of the fibers C1, and a hydrogen bond between the fiber C1 and the thermoplastic starch C2 can be more efficiently formed.

As will be described in detail later, the composite C100 contains the fiber C1 and the thermoplastic starch C2 fused to the fiber C1, but the composite C100 may also contain a fiber C1 to which the thermoplastic starch C2 is not fused in addition to the fiber C1 to which the thermoplastic starch C2 is fused.

An average length of the fiber C1 is not particularly limited, but is preferably 0.1 mm or higher and 50 mm or lower, more preferably 0.2 mm or higher and 5.0 mm or lower, and even more preferably 0.3 mm or higher and 3.0 mm or lower.

Thereby, stability, strength, and the like of the shape of the molded product produced using the composite C100 can be made more excellent.

An average thickness of the fiber C1 is not particularly limited, but is preferably 0.005 mm or higher and 0.5 mm or lower, and more preferably 0.01 mm or higher and 0.05 mm or lower.

Thereby, stability, strength, and the like of the shape of the molded product produced using the composite C100 can be made more excellent. It is possible to more effectively prevent unintended unevenness on the surface of the molded product produced using the composite C100.

An average aspect ratio of the fiber C1, that is, a ratio of the average length to the average thickness is not particularly limited, but is preferably 10 or higher and 1000 or lower, and more preferably 15 or higher and 500 or lower.

Thereby, stability, strength, and the like of the shape of the molded product produced using the composite C100 can be made more excellent. It is possible to more effectively prevent unintended unevenness on the surface of the molded product produced using the composite C100.

A content of the fiber C1 in the composite C100 is not particularly limited, but is preferably 50.0% by mass or more and 99.0% by mass or less, more preferably 60.0% by mass or more and 95.0% by mass or less, and even more preferably 70.0% by mass or more and 90.0% by mass or less.

Thereby, properties such as stability and strength of the shape of the molded product produced using the composite C100 can be made more excellent. In addition, moldability when producing the molded product can be made more excellent, which is also advantageous in improving the productivity of the molded product.

### 1-2. Thermoplastic starch

The composite C100 contains the thermoplastic starch C2.

The thermoplastic starch C2 is a component that functions as a binder that binds fibers C1 to each other in the molded product produced using the composite C100. In particular, since the thermoplastic starch C2 is a raw material derived from biomass, it is possible to suitably deal with environmental problems and saving of underground resources.

Thermoplasticity of the thermoplastic starch C2 refers to a plasticizing property when heated in a state where moisture is not added.

Examples of the thermoplastic starch C2 include a thermoplastic starch obtained by internally plasticizing a starch and a thermoplastic starch obtained by externally plasticizing a starch.

The internal plasticization of the starch can be carried out by, for example, esterifying functional groups contained in a starch, particularly, esterifying functional groups contained in a starch by a compound including a carbon chain having 2 or more carbon atoms.

The external plasticization of the starch can be carried out by, for example, mixing a starch with a compound that has a plurality of functional groups capable of forming a hydrogen bond between the functional groups of the starch in the molecule.

Among these, the thermoplastic starch C2 is preferably a thermoplastic starch obtained by externally plasticizing a starch, that is, a thermoplastic containing a starch and an external plasticizer.

Thereby, the biodegradability of the thermoplastic starch C2 can be more excellent, and the molded product produced using the composite C100 can be more suitably recycled. By adjusting the mixing amount of the external plasticizer and the like, characteristics of the thermoplastic starch C2 and the like can be adjusted more easily.

Hereinafter, the thermoplastic starch C2 containing a starch and an external plasticizer will be mainly described.

### 1-2-1. Starch

A starch constituting the thermoplastic starch C2, that is, a starch that is plasticized by an external plasticizer, is a polymer material in which a plurality of α-glucose molecules are polymerized by glycosidic bonds.

Examples of the starch include amylose and amylopectin, and include at least one of amylose or amylopectin.

A weight-average molecular weight of the starch is not particularly limited, but the starch that has been subjected to chemical treatment such as acid treatment to have a polymerization average molecular weight of about 40,000 to 600,000 may be used.

As the starch, for example, a starch derived from various plants can be used, and more specifically, a starch derived from, for example, grains such as corn, wheat, and rice, beans such as broad beans, mung beans, red beans, potatoes such as potatoes, sweet potatoes, tapioca, wild grasses such as erythronium, bracken, and kudzu, or palms such as sago palms can be used. 1-2-2. External plasticizer

The external plasticizer is a constituent component of the thermoplastic starch C2 and is obtained by externally plasticizing the starch.

As the external plasticizer, for example, an external plasticizer obtained by suitably using a compound that has a plurality of functional groups capable of forming a hydrogen bond between the functional groups of the starch in the molecule.

Examples of the functional group in which a hydrogen bond can be formed therebetween include a hydroxyl group, an amino group, a carboxyl group, and the like.

Examples of the external plasticizer include glycols such as glycerin, ethylene glycol, propylene glycol, diethylene glycol, triethylene glycol, polyethylene glycol, butylene glycol, polyglycerin, and thiodiglycol, sugars such as glucose, fructose, sucrose, galactose, maltose, lactose, water candy, trehalose, and malt sugar, sugar alcohols such as sorbitol, maltitol, xylitol, reduced sugar syrup, erythritol, mannitol, lactitol, and palatinit, sugar derivatives such as sucralose, hydroxy acids such as tartaric acid, polyhydric alcohols such as polyvinyl alcohol, trehalose, polyhydroxy(meth)acrylate, hyaluronic acid; polyvalent amines such as urea and thiourea; hydroxy acids such as tartaric acid, polyvalent carboxylic acid such as hyaluronic acid; polyvinylpyrrolidone, and the like, and among these, one kind can be used singly or two or more kinds can be used in combination.

In particular, the external plasticizer preferably contains at least one of a polyhydric alcohol, a polyvalent amine, or a polyvalent carboxylic acid.

Thereby, for example, when a relatively large amount of water is added to the molded product produced using the composite C100, the external plasticizer is dissolved, and a large number of relatively large gaps are provided between the fibers C1, so that a porous body is formed. As a result, the biodegradability of the molded product can be improved.

A content of the external plasticizer in the thermoplastic starch C2 is preferably 12% by mass or more and 50% by mass or less, more preferably 15% by mass or more and 40% by mass or less, and even more preferably 20% by mass or more and 30% by mass or less.

Thereby, the bonding strength between the fiber C1 and the thermoplastic starch C2, an overall strength of the molded product produced using the composite C100, for example, the tensile strength of the sheet-shaped molded product and the like can be more excellent.

A melting temperature of the thermoplastic starch C2 is preferably 80°C or higher and 180°C or lower, more preferably 90°C or higher and 160°C or lower, and even more preferably 100°C or higher and 140°C or lower.

Thereby, it is possible to relatively reduce the heating temperature when producing the molded product using the composite C100, it is possible to effectively prevent the constituting materials of the molded product from being unintentionally deteriorated, and it is also preferable from the viewpoint of energy saving. Heat resistance of the obtained molded product and the mechanical strength at a relatively low temperature such as room temperature can be more excellent.

The melting temperature of the thermoplastic starch C2 can be determined by measurement according to JIS K7210, more specifically, a heating method using a flow tester. CFT-100D produced by Shimadzu Corporation can be used for the measurement of the melting temperature, for example, and in this case, for example, a cylinder pressure can be measured as 0.5 MPa. In the following description, unless otherwise specified, the "melting temperature" refers to a value obtained through the measurement carried out under the above described methods and conditions.

A content of the thermoplastic starch C2 in the composite C100 is not particularly limited, but is preferably 1.0% by mass or more and 30.0% by mass or less, more preferably 3.0% by mass or more and 20.0% by mass or less, and even more preferably 4.0% by mass or more and 16.0% by mass or less.

Thereby, properties such as stability and strength of the shape of the molded product produced using the composite C100 can be made more excellent. In addition, moldability when producing the molded product can be made more excellent, which is also advantageous in improving the productivity of the molded product.

The content of the thermoplastic starch C2 with respect to 100 parts by mass of the composite C100 is preferably 1.5 parts by mass or more and 40.0 parts by mass or less, more preferably 3.0 parts by mass or more and 25.0 parts by mass or less, and even more preferably 5.0 parts by mass or more and 20.0 parts by mass or less.

Thereby, properties such as stability and strength of the shape of the molded product produced using the composite C100 can be made more excellent. In addition, moldability when producing the molded product can be made more excellent, which is also advantageous in improving the productivity of the molded product.

### 1-3. Other components

The composite C100 may contain components other than the fiber C1 and the thermoplastic starch C2 described above.

Examples of the components include natural gum pastes such as etherified tamarind gum, etherified locust bean gum, etherified guar gum, and acacia arabia gum; fiber elementinducing pastes such as etherified carboxymethyl cellulose and hydroxyethyl cellulose; polysaccharides such as starch, glycogen, dextrin, amylose, kudzu, konjac, and dogtooth violet starch; seaweeds such as sodium alginate and agar; animal proteins such as collagen, gelatin, and hydrolyzed collagen; sizing agents; thermoplastic starch that is not fused to the fibers C1, impurities derived from the fibers C1; impurities derived from the thermoplastic starch C2; and the like.

However, a content of components other than the fiber C1 and the thermoplastic starch C2 in the composite C100 is preferably 30% by mass or less, more preferably 20% by mass or less, and even more preferably 10% by mass or less.

### 2. Molded product

Next, the molded product of the present disclosure will be described.

The molded product of the present disclosure includes the above described composite C100 of the present disclosure.

Thereby, it possible to provide the molded product having a desired shape while suppressing the use of petroleum-derived materials. Such the molded product is also excellent in biodegradability. Such the molded product is also excellent in recyclability, strength, and the like.

A shape of the molded product of the present disclosure is not particularly limited, and may be any shape such as a sheet shape, a block shape, a spherical shape, a three-dimensional shape, and the like, but the molded product of the present disclosure preferably has a sheet shape. The sheet shape described herein refers to a molded product molded to have a thickness of 30 µm or higher and 30 mm or lower and a density of 0.05 g/cm³ or higher and 1.5 g/cm³ or lower.

Thereby, for example, the molded product can be suitably used as a recording medium or the like. In addition, by using a producing method and a producing device as described later, the molded product is more efficiently produced.

When the molded product of the present disclosure is a sheet-shaped recording medium, a thickness thereof is preferably 30 µm or higher and 3 mm or lower.

Thereby, the molded product can be suitably used as a recording medium. In addition, by using a producing method and a producing device as described later, the molded product is more efficiently produced.

When the molded product of the present disclosure is a liquid absorber, a thickness thereof is preferably 0.3 mm or higher and 30 mm or lower.

Thereby, the molded product can be suitably used as a liquid absorber. In addition, by using a producing method and a producing device as described later, the molded product is more efficiently produced.

When the molded product of the present disclosure is a sheet-shaped recording medium, a density thereof is preferably 0.6 g/m³ or higher and 1.0 g/m³ or lower.

Thereby, the molded product can be suitably used as a recording medium.

When the molded product of the present disclosure is a liquid absorber, a density thereof is preferably 0.05 g/m³ or higher and 0.4 g/m³ or lower.

Thereby, the molded product can be suitably used as a liquid absorber.

At least a part of the molded product of the present disclosure may be formed of the above described composite C100 of the present disclosure, and may have a portion that is not formed of the composite C100 of the present disclosure.

The application of the molded product of the present disclosure is not particularly limited, and examples thereof include a recording medium, a liquid absorber, a buffer material, a sound absorbing material, and the like.

The molded product of the present disclosure, which has been subjected to machining such as cutting or various chemical treatments after the molding step, may be used.

### 3. Method for producing molded product

Next, a method for producing a molded product of the present disclosure will be described.

A method for producing a molded product of the present disclosure includes a molding raw material preparing step of preparing a molding raw material containing a fiber and a thermoplastic starch, and a molding step of molding the molding raw material into a predetermined shape by heating and pressurizing the molding raw material.

Thereby, it is possible to suitably produce the molded product having a desired shape even with adding almost no moisture while suppressing the use of petroleum-derived materials. Therefore, it is also advantageous from the viewpoints of productivity and production cost of the molded product, energy saving, miniaturization of the production facility of the molded product, and the like. The molded product produced by using the producing method of the present disclosure is also excellent in biodegradability. The molded product produced by using the method of the present disclosure can be easily recycled. In addition, the strength of the molded product can be made excellent, and the scattering of fibers during the production of the molded product can be prevented more effectively.

### 3-1. Molding raw material preparing step

In the molding raw material preparing step, the molding raw material containing a fiber and a thermoplastic starch is prepared.

The fiber constituting the molding raw material preferably satisfies the same conditions as described in the above 1-1.

Thereby, the above described effect can be obtained.

The thermoplastic starch constituting the molding raw material preferably satisfies the same conditions as described in the above 1-2.

Thereby, the above described effect can be obtained.

When the molding raw material contains a thermoplastic starch in particle form, an average particle size of the thermoplastic starch is preferably 1 µm or higher and 100 µm or lower, more preferably 3 µm or higher and 40 µm or lower, and even more preferably 5 µm or higher and 30 µm or lower.

Thereby, the ease of handling and fluidity of the thermoplastic starch can be made more suitable, and the molding raw material can be more suitably prepared. In addition, it is possible to more effectively prevent the thermoplastic starch from being unintentionally separated from the molding raw material in a state where the fiber and the thermoplastic starch are mixed.

In the present specification, an average particle size is a volume-based average particle size, and can be determined by, for example, adding a sample to a dispersion medium in which the sample does not dissolve or swell, and measuring a dispersion liquid dispersed by an ultrasonic dispersion instrument for 3 minutes with a particle size distribution measuring device (Microtrack MT3000II (trade name) manufactured by Nikkiso Co., Ltd.) using a laser diffraction and scattering method. A device having the same quality as the laser diffraction and scattering particle size distribution measuring device may be used.

When a thermoplastic starch obtained by externally plasticizing starch, that is, a thermoplastic starch containing a starch and an external plasticizer is used as the thermoplastic starch, for example, in this step, a thermoplastic starch prepared in advance using a starch and an external plasticizer may be mixed with the fibers, or a thermoplastic starch containing a starch and an external plasticizer may be prepared in this step. More specifically, for example, while the fiber, the starch, and the external plasticizer are mixed with one another to prepare a thermoplastic starch containing the starch and the external plasticizer in the mixture, the molding raw material containing the thermoplastic starch and the fiber may be prepared. For example, this step may be carried out by mixing the fiber with the starch and then further adding and mixing the external plasticizer, or mixing the fiber with the external plasticizer, and then further adding and mixing the starch.

The molding raw material used in the method for producing a molded product of the present disclosure may contain the fiber and the thermoplastic starch, but is preferably the composite of the present disclosure described above. That is, the molding raw material preferably contains the fiber and the thermoplastic starch fused to the fiber.

Thereby, a thermoplastic starch is effectively prevented from being unintentionally separated in a process of producing a molded product, for example, in steps of forming a fiber raw material M1 to a first web M5 in a method using a molded product producing device 100 as described later, and a molded product containing a thermoplastic starch can be more reliably obtained in a preferable form and amount.

When the molding raw material is the composite of the present disclosure described above, it is preferable that the molding raw material satisfies the same conditions as described in the above 1.

Thereby, the above described effect can be obtained.

In particular, the molding raw material preferably contains a defibrated material of the composite formed in a sheet shape.

Thereby, the defibrated material usually has a cotton-like shape, and can be more suitably adapted to the production of molded products having various shapes and thicknesses. By using the sheet-shaped composite as a raw material for the defibrated material, the molding raw material is easily prepared. The molding raw material can be easily prepared from the sheet-shaped composite as only the required amount when needed, so that a space required for storing the raw material can be reduced, thereby also contributing to miniaturization of the molded product producing device. When the sheet-shaped composite is waste paper used as a recording medium or the like, and a sheet-shaped molded product is produced therefrom, the number of times of reusing the composite and the number of times of recycling can be more suitably increased, which is preferable.

When an ordinary starch was used as a binder, the starch could not be reproduced by a plurality of number of times since the starch was denatured due to the addition of moisture during molding. However, the thermoplastic starch used in the present disclosure is difficult to denature even though the starch repeatedly melts and solidifies, so that the starch can be suitably reproduced by a plurality of number of times.

### 3-2. Molding step

In the molding step, the molding raw material is heated and pressurized to be molded as a predetermined shape. Thereby, the molded product of the present disclosure, which is obtained by bonding fibers to each other through the thermoplastic starch fused to the fibers, can be obtained.

A heating temperature in the molding step is not particularly limited, but is preferably 60°C or higher and 180°C or lower, more preferably 70°C or higher and 150°C or lower, and even more preferably 80°C or higher and 120°C or lower.

Thereby, the constituting material of the molded product is effectively prevented from being unintentionally deteriorated, and it is also preferable from the viewpoint of energy saving. Heat resistance of the obtained molded product and the mechanical strength at a relatively low temperature such as room temperature can be more excellent. The above temperature is sufficiently lower than a case where polyester, which is a synthetic resin, is used as a binder.

When the heating temperature in the molding step is Tₕ [°C] and the melting temperature of the thermoplastic starch is T_{1/2} [°C], -30 ≤ T_{1/2} - Tₕ ≤ 30 is preferable, -25 ≤ T_{1/2} - Tₕ ≤ 20 is more preferable, and -20 ≤ T_{1/2} - Tₕ ≤ 20 is even more preferable.

Thereby, the constituting material of the molded product is effectively prevented from being unintentionally deteriorated, and it is also preferable from the viewpoint of energy saving. Heat resistance of the obtained molded product and the mechanical strength at a relatively low temperature such as room temperature can be more excellent.

The pressurization in the molding step is preferably performed at 0.1 MPa or higher and 100 MPa or lower, and more preferably 0.5 MPa or higher and 80 MPa or lower.

As described above, the method for producing a molded product of the present disclosure can significantly reduce the amount of water to be used as compared with a papermaking method in the related art, and it is also possible not to use any water in the process of producing the molded product. However, for example, water may be used in the process of producing the molded product for the purpose of preventing scattering of the molding raw material, preventing static electricity, and the like.

Even in such a case, the amount of water to be used can be significantly reduced as compared with the papermaking method in the related art. By reducing the amount of water to be used, the content of moisture contained in the molding raw material in the process of producing the molded product can be reduced, and while obtaining the effects of using water as described above, energy and time required for dehydration, drying, and the like can be sufficiently reduced. In particular, as described later, when the content of moisture contained in the molding raw material in the process of producing the molded product is sufficiently low, the moisture in the molding raw material is removed in the process of producing the molded product such as the molding step without any special treatment such as dehydration and drying. Therefore, the content of moisture in the finally obtained molded product can be sufficiently lowered, and reliability of the molded product can be made more excellent.

More specifically, the maximum content of moisture contained in the molding raw material in the process of producing the molded product is preferably 25% by mass or less, more preferably 20% by mass or less, and even more preferably 15% by mass or less.

Thereby, the above described effect is more remarkably exhibited.

The content of moisture can be determined by measurement using a heat-drying moisture meter manufactured by A&D Company, Limited.

### 3-3. Molded product producing device

Next, the molded product producing device that can be suitably applied to the method for producing a molded product of the present disclosure will be described.

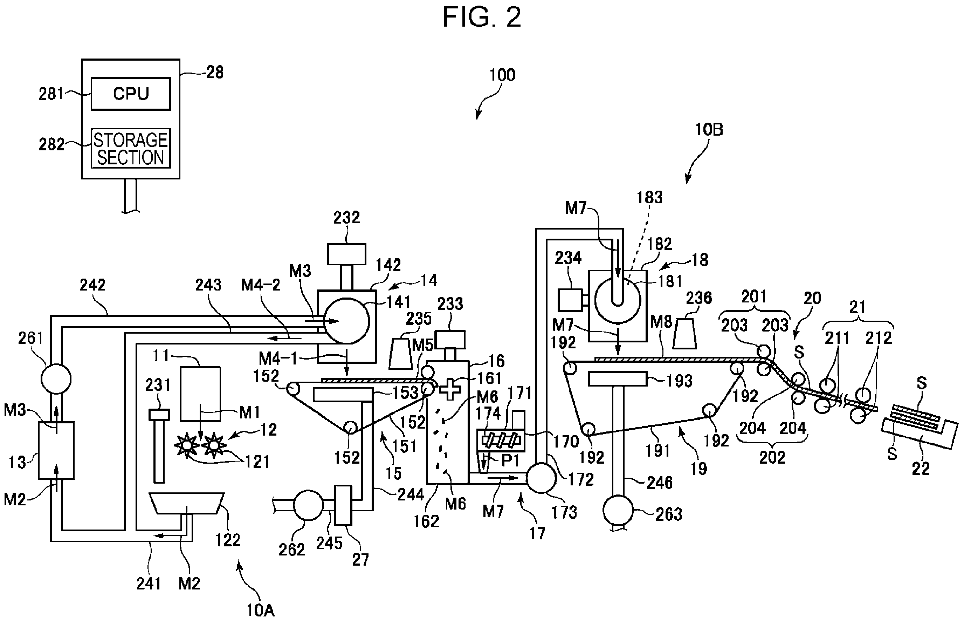

FIG. 2 is a schematic side view illustrating a preferred embodiment of the molded product producing device.

In the following, the upper side of FIG. 2 may be referred to as an "upper" or an "upper direction", and the lower side may be referred to as a "lower" or a "lower direction".

FIG. 2 is a schematic configuration diagram, and a positional relationship of each section of a molded product producing device 100 may be different from the positional relationship illustrated in the figure. In each section in the figure, directions in which a fiber raw material M1, a coarsely crushed piece M2, a defibrated material M3, a first sorted material M4-1, a second sorted material M4-2, a first web M5, a fine fragment material M6, a mixture M7, a second web M8, and a sheet S are transported, that is, directions indicated by arrows are also referred to as transportation directions. The tip side of the arrow is also referred to as the downstream in the transportation direction, and the base end of the arrow is also referred to as the upstream in the transportation direction.

The molded product producing device 100 illustrated in FIG. 2 is a device for obtaining a molded product by coarsely crushing, defibrating, and accumulating the fiber raw material M1 and molding the accumulated material using a molding section 20.

The molded product produced by the molded product producing device 100 may have a sheet shape such as recycled paper or a block shape. A density of the molded product is not particularly limited, and a molded product having a relatively high fiber density such as a sheet may be used, a molded product having a relatively low fiber density such as a sponge body may be used, or a molded product in which these properties are mixed may be used.

As the fiber raw material M1, for example, waste paper that has been used or unnecessary, or a fiber molded product having a shape such as a block shape, a spherical shape, or a three-dimensional shape can be used. In addition, for example, as the fiber raw material M1, a sheet material containing a fiber and a thermoplastic starch fused to the fiber can be used. The sheet material may be, for example, recycled paper or non-recycled paper.

In the following description, a case where the molded product is a sheet S made of recycled paper will be mainly described, the molded product being produced by using waste paper which is a sheet material formed of the composite containing the fiber and the thermoplastic starch that is fused to the fiber, as the fiber raw material M1.

The molded product producing device 100 illustrated in FIG. 2 is provided with a sheet supply device 11, a coarsely crushing section 12, a defibrating section 13, a sorting section 14, a first web forming section 15, a fragmenting section 16, a mixing section 17, a dispersing section 18, a second web forming section 19, a molding section 20, a cutting section 21, a stock section 22, a collecting section 27, and a control section 28 that controls an operation thereof. Each of the coarsely crushing section 12, defibrating section 13, sorting section 14, first web forming section 15, fragmenting section 16, mixing section 17, dispersing section 18, second web forming section 19, molding section 20, cutting section 21, and stock section 22 is a processing section that processes a sheet.

A sheet processing device 10A includes the sheet supply device 11 and the coarsely crushing section 12 or the defibrating section 13. A fiber body accumulation device 10B includes the sheet processing device 10A and the second web forming section 19.

The molded product producing device 100 is provided with a humidifying section 231, a humidifying section 232, a humidifying section 233, a humidifying section 234, a humidifying section 235, and a humidifying section 236. The molded product producing device 100 is provided with a blower 261, a blower 262, and a blower 263.

The humidifying section 231 to the humidifying section 236 and the blower 261 to the blower 263 are electrically coupled to the control section 28, and an operation thereof is controlled by the control section 28. That is, in the present embodiment, an operation of each section of the molded product producing device 100 is controlled by one control section 28. However, the present disclosure is not limited thereto, and for example, the molded product producing device 100 may include a control section that controls an operation of each section of the sheet supply device 11 and a control section that controls operations of parts other than the sheet supply device 11.

In the molded product producing device 100, a raw material supplying step, a coarsely crushing step, a defibrating step, a sorting step, a first web forming step, a fragmenting step, a mixing step, a releasing step, a accumulating step, a sheet forming step, a cutting step are executed in this order. The molding raw material preparing step in the method for producing a molded product of the present disclosure corresponds to a range from the raw material supplying step to the mixing step, and the sheet forming step corresponds to the molding step in the method for producing a molded product of the present disclosure.

A configuration of each section will be described below.

The sheet supply device 11 is a part that performs the raw material supplying step of supplying the fiber raw material M1 to the coarsely crushing section 12. As described above, as the fiber raw material M1, the composite containing a fiber and a thermoplastic starch fused to the fiber can be suitably used. In particular, as the fiber raw material M1, fibers containing cellulose fibers can be suitably used.

The coarsely crushing section 12 is a part that performs the coarsely crushing step of coarsely crushing the fiber raw material M1 supplied from the sheet supply device 11 in air such as atmosphere. The coarsely crushing section 12 has a pair of coarsely crushing blades 121 and a chute 122.

The pair of coarsely crushing blades 121 can coarsely crush the fiber raw material M1 between the coarsely crushing blades by rotating in opposite directions, that is, can cut the fiber raw material M1 into a coarsely crushed piece M2. A shape and size of the coarsely crushed piece M2 are preferably suitable for a defibrating process in the defibrating section 13, for example, a small piece having one side length of 100 mm or lower is preferable, and a small piece having one side length of 10 mm or higher and 70 mm or lower is more preferable.

The chute 122 is disposed below the pair of coarsely crushing blades 121, and has a funnel shape, for example. Thereby, the chute 122 can receive the coarsely crushed pieces M2 that are coarsely crushed by the coarsely crushing blades 121 and then fallen.

Above the chute 122, the humidifying section 231 is disposed adjacent to the pair of coarsely crushing blades 121. The humidifying section 231 humidifies the coarsely crushed pieces M2 in the chute 122. The humidifying section 231 includes a filter containing moisture, and is a vaporization type humidifier that supplies humidified air with increased humidity to the coarsely crushed pieces M2 by passing the air through the filter. By supplying the humidified air to the coarsely crushed pieces M2, it is possible to prevent the coarsely crushed pieces M2 from adhering to the chute 122 or the like due to static electricity.

The chute 122 is coupled to the defibrating section 13 through a tube 241. The coarsely crushed pieces M2 collected on the chute 122 pass through the tube 241 and are transported to the defibrating section 13.

The defibrating section 13 is a part that performs the defibrating step of defibrating the coarsely crushed pieces M2 in air, that is, by using a dry method. By a defibrating process in the defibrating section 13, the defibrated material M3 can be produced from the coarsely crushed piece M2. Here, "defibrating" means that the coarsely crushed piece M2 formed by binding a plurality of fibers with each other is unraveled into individual fibers. This unraveled fibers form the defibrated materials M3. A shape of the defibrated material M3 is linear or strip-shaped. Furthermore, the defibrated materials M3 may exist in a state of being intertwined and agglomerated, that is, in a state of forming a so-called "lump".

For example, in the present embodiment, the defibrating section 13 includes an impeller mill having a rotary blade that rotates at high speed and a liner located on the outer periphery of the rotary blade. The coarsely crushed piece M2 that has flowed into the defibrating section 13 is sandwiched between the rotary blade and the liner, and is defibrated.

The defibrating section 13 can generate an air flow, that is, airstream from the coarsely crushing section 12 toward the sorting section 14 by the rotation of the rotary blade. Thereby, the coarsely crushed piece M2 can be sucked from the tube 241 to the defibrating section 13. After the defibrating process, the defibrated materials M3 can be sent out to the sorting section 14 via a tube 242.

The blower 261 is installed in the middle of the tube 242. The blower 261 is an airflow generator generating airstream toward the sorting section 14. Thereby, it is promoted that the defibrated materials M3 are sent out to the sorting section 14.

The sorting section 14 is a part that performs a sorting step of sorting the defibrated materials M3 according to sizes of the fiber length. In the sorting section 14, the defibrated material M3 is sorted into the first sorted material M4-1 and the second sorted material M4-2 which is larger than the first sorted material M4-1. The first sorted material M4-1 has a size suitable for the sheet S to be subsequently produced. An average length thereof is preferably 1 µm or higher and 30 µm or lower. On the other hand, the second sorted material M4-2 includes, for example, insufficiently defibrated materials, agglomerates generated such that the defibrated fibers are excessively agglomerated to each other.

The sorting section 14 includes a drum section 141 and a housing section 142 accommodating the drum section 141.

The drum section 141 is a cylindrical net body and is a sieve rotating about a central axis. The defibrated materials M3 flows into the drum section 141. By rotating the drum section 141, the defibrated materials M3 having a size smaller than a mesh opening are sorted as the first sorted materials M4-1, and the defibrated materials M3 having a size larger than the mesh opening is sorted as the second sorted materials M4-2. The first sorted materials M4-1 fall from the drum section 141.

On the other hand, the second sorted materials M4-2 are sent out to a tube 243 coupled to the drum section 141. The upstream of the tube 243 is coupled to a side opposite to the drum section 141, that is, coupled to the tube 241. The second sorted materials M4-2 that have passed through the tube 243 get together with the coarsely crushed pieces M2 in the tube 241 and flow into the defibrating section 13 together with the coarsely crushed pieces M2. Thereby, the second sorted materials M4-2 are returned to the defibrating section 13 and subjected to the defibrating process together with the coarsely crushed pieces M2.

The first sorted materials M4-1 to be fallen from the drum section 141 fall while being dispersed in the air, and directs toward the first web forming section 15 located below the drum section 141. The first web forming section 15 is a part that performs the first web forming step of forming the first web M5 by using the first sorted materials M4-1. The first web forming section 15 includes a mesh belt 151, three tension rollers 152, and a suction section 153.

The mesh belt 151 is an endless belt on which the first sorted materials M4-1 are accumulated. The mesh belt 151 winds around three tension rollers 152. The first sorted materials M4-1 on the mesh belt 151 is transported to the downstream by rotational drive of the tension rollers 152.

Sizes of the first sorted materials M4-1 are larger than the mesh openings of the mesh belt 151. Thereby, the first sorted materials M4-1 are restricted from passing through the mesh belt 151, and thus can be accumulated on the mesh belt 151. The first sorted materials M4-1 are transported to the downstream together with the mesh belt 151 while being accumulated on the mesh belt 151, and are formed as the first web M5 having a layered shape.

In addition, dust, dirt, and the like may be mixed between the first sorted materials M4-1. Dust and dirt may be generated in pursuance of, for example, a coarsely crushing process or a defibrating process. Such dust and dirt are collected by a collecting section 27, which will be described later.

The suction section 153 is a suction mechanism sucking air below the mesh belt 151. Thereby, the dust and dirt that have passed through the mesh belt 151 can be sucked together with the air.

The suction section 153 is coupled to the collecting section 27 through a tube 244. The dust and dirt sucked by the suction section 153 are collected by the collecting section 27.

A tube 245 is further coupled to the collecting section 27. A blower 262 is installed in the middle of the tube 245. By operating the blower 262, a suction force can be generated at the suction section 153. Thereby, it is promoted that the first web M5 on the mesh belt 151 is formed. Dust, dirt, and the like are removed from the first web M5. Dust and dirt pass through the tube 244 and reach the collecting section 27 by an operation of the blower 262.

The housing section 142 is coupled to the humidifying section 232. The humidifying section 232 is a vaporization type humidifier. Thereby, humidified air is supplied into the housing section 142. In addition, the first sorted materials M4-1 can be humidified by the humidified air, and thus it is possible to prevent the first sorted materials M4-1 from adhering to an inner wall of the housing section 142 due to electrostatic force.

The humidifying section 235 is disposed on the downstream of the sorting section 14. The humidifying section 235 is an ultrasonic humidifier that sprays water. Thereby, moisture can be supplied to the first web M5, and thus the amount of moisture in the first web M5 is adjusted. By this adjustment, it is possible to suppress the adsorption of the first web M5 to the mesh belt 151 due to electrostatic force. Thereby, the first web M5 is easily peeled off from the mesh belt 151 at a position where the mesh belt 151 is folded back by the tension roller 152.

The fragmenting section 16 is disposed on the downstream of the humidifying section 235. The fragmenting section 16 is a part that performs the fragmenting step of fragmenting the first web M5 that has been peeled from the mesh belt 151. The fragmenting section 16 includes a propeller 161 rotatably supported and a housing section 162 accommodating the propeller 161. Then, the first web M5 can be fragmented by the rotating propeller 161. The first web M5 is fragmented to be the fine fragment material M6. The fine fragment material M6 falls in the housing section 162.

The housing section 162 is coupled to the humidifying section 233. The humidifying section 233 is a vaporization type humidifier. Thereby, humidified air is supplied into the housing section 162. By using the humidified air, it is possible to prevent the fine fragment material M6 from adhering to an inner wall of the propeller 161 and an inner wall of the housing section 162 due to electrostatic force.

The mixing section 17 is disposed on the downstream of the fragmenting section 16. The mixing section 17 is a part that performs the mixing step of mixing the fine fragment material M6 and an additive agent. The mixing section 17 includes an additive agent supplying section 171, a tube 172, and a blower 173.

The tube 172 couples a housing section 162 of the fragmenting section 16 to a housing 182 of the dispersing section 18, and is a flow path through which the mixture M7 of the fine fragment material M6 and the additive agent passes.

The additive agent supplying section 171 is coupled in the middle of the tube 172. The additive agent supplying section 171 includes a housing section 170 in which the additive agent is accommodated, and a screw feeder 174 provided in the housing section 170. By rotating the screw feeder 174, the additive agent in the housing section 170 is extruded from the housing section 170 to be supplied into the tube 172. The additive agent supplied into the tube 172 is mixed with the fine fragment material M6 to be a mixture M7.

Here, examples of the additive agent supplied from the additive agent supplying section 171 include a binding agent for binding fibers to each other, a coloring agent for coloring fibers, an agglomeration inhibitor for suppressing fiber agglomeration, a flame retardant for making fibers and the like hard to burn, a paper strength enhancing agent for enhancing a paper strength of the sheet S, a defibrated material, and the like, and among these, one additive agent can be used singly, or two or more additive agents can be used in combination. In the following, a case where the additive agent is a thermoplastic starch P1 as a binding agent will be mainly described.

The thermoplastic starch P1 is supplied from the additive agent supplying section 171, so that the sheet S as a suitable molded product can be obtained even when a content of the thermoplastic starch in the fiber raw material M1 is relatively low, or a case where a relatively large proportion of the thermoplastic starch contained in the fiber raw material M1 is removed by a process in which the molded product producing device 100 is used. That is, the content of the thermoplastic starch in the sheet S as the finally obtained molded product can be sufficiently increased, the thermoplastic starch can be fused to the fibers constituting the sheet S with high adhesion, and as a result, the above described effects are more remarkably exhibited.

The thermoplastic starch P1 preferably satisfies the same conditions as the thermoplastic starch C2 as the constituent component of the composite C100 described in the above 1-2.

Thereby, the same effect as described above can be obtained.

As the additive agent supplied from the additive agent supplying section 171, instead of the thermoplastic starch P1, the composite of the present disclosure, that is, the composite containing a fiber and a thermoplastic starch that is fused to the fiber may be used.

Thereby, for example, when the sheet material containing a fiber and a thermoplastic starch that is fused to the fiber is used as the fiber raw material M1, even when the mixing step in the mixing section 17 is simplified, unintended variation of the composition of the second web M8, particularly unintended variation in the presence of the thermoplastic starch at each site, can be suppressed. As a result, it is possible to suppress unintended variation and the like in the composition of the sheet S as the finally obtained molded product, and reliability of the sheet S can be further improved.

In the middle of the tube 172, the blower 173 is installed on the downstream of the additive agent supplying section 171. It is promoted that the fine fragment material M6 and the thermoplastic starch P1 are mixed with each other by an operation of a rotating section such as a blade included in the blower 173. The blower 173 can generate airstream toward the dispersing section 18. By this airstream, the fine fragment material M6 and the thermoplastic starch P1 can be agitated in the tube 172. Thereby, the mixture M7 is transported to the dispersing section 18 in a state where the fine fragment material M6 and the thermoplastic starch P1 are uniformly dispersed. Furthermore, the fine fragment material M6 in the mixture M7 is unraveled in a process of passing through the tube 172 to have a fine fiber shape.

As illustrated in FIG. 2, the blower 173 is electrically coupled to the control section 28, and an operation thereof is controlled. In addition, by adjusting the amount of air blown by the blower 173, the amount of air sent into the drum 181 can be adjusted.

Although it is not illustrated, an end of the tube 172 on the drum 181 side is bifurcated, and the bifurcated ends are coupled to an introduction port (not shown) formed on an end surface of the drum 181, respectively.

The dispersing section 18 illustrated in FIG. 2 is a part that performs the releasing step of unraveling and releasing the fibers that have been entangled with each other in the mixture M7. The dispersing section 18 includes the drum 181 that introduces and releases the mixture M7 that is a defibrated material, the housing 182 that accommodates the drum 181, and a drive source 183 that rotationally drives the drum 181.

The drum 181 is a cylindrical net body and is a sieve rotating about a central axis. By rotating the drum 181, fibers or the like in the mixture M7, which are smaller than mesh openings, can pass through the drum 181. At that time, the mixture M7 is unraveled and released together with air. That is, the drum 181 functions as a releasing section that releases a material containing fibers.

Although it is not illustrated, the drive source 183 includes a motor, a speed reducer, and a belt. The motor is electrically coupled to the control section 28 via a motor driver. The rotational force output from the motor is reduced by the speed reducer. The belt is, for example, an endless belt, and winds around an output axis of the speed reducer and an outer circumference of the drum. Thereby, the rotational force of the output axis of the speed reducer is transmitted to the drum 181 through the belt.

The housing 182 is coupled to the humidifying section 234. The humidifying section 234 is a vaporization type humidifier. Thereby, humidified air is supplied into the housing 182. In addition, the inside of the housing 182 can be humidified by the humidified air, and thus it is possible to prevent the mixture M7 from adhering to an inner wall of the housing 182 due to electrostatic force.

The mixture M7 released from the drum 181 falls while being dispersed in the air, and directs toward the second web forming section 19 located below the drum 181. The second web forming section 19 is a part that performs the accumulating step of accumulating the mixture M7 to form the second web M8 that is an accumulated material. The second web forming section 19 includes a mesh belt 191, tension rollers 192, and a suction section 193.

The mesh belt 191 is a mesh member, and in the illustrated configuration, the mesh belt 191 is an endless belt. The mixture M7 dispersed and released by the dispersing section 18 is accumulated on the mesh belt 191. The mesh belt 191 winds around four tension rollers 192. The mixture M7 on the mesh belt 191 is transported to the downstream by rotational drive of the tension rollers 192.

In the illustrated configuration, the mesh belt 191 is used as an example of the mesh member, but the present disclosure is not limited thereto, and for example, a flat plate shape may be used.

A large proportion of the mixture M7 on the mesh belt 191 has a size larger than mesh openings of the mesh belt 191. Thereby, the mixture M7 is restricted from passing through the mesh belt 191 and thus accumulated on the mesh belt 191. The mixture M7 is transported to the downstream together with the mesh belt 191 while being accumulated on the mesh belt 191, and is formed as the second web M8 having a layered shape.

The suction section 193 is a suction mechanism sucking air below the mesh belt 191. Thereby, the mixture M7 can be sucked onto the mesh belt 191, and thus it is promoted that the mixture M7 is accumulated on the mesh belt 191.

A tube 246 is coupled to the suction section 193. A blower 263 is installed in the middle of the tube 246. By operating the blower 263, a suction force can be generated at the suction section 193.

The humidifying section 236 is disposed on the downstream of the dispersing section 18. The humidifying section 236 is the same ultrasonic humidifier as the humidifying section 235. Thereby, moisture can be supplied to the second web M8, and thus the amount of moisture in the second web M8 is adjusted. By this adjustment, it is possible to suppress the adsorption of the second web M8 to the mesh belt 191 due to electrostatic force. Thereby, the second web M8 is easily peeled off from the mesh belt 191 at a position where the mesh belt 191 is folded back by the tension roller 192.

The total amount of moisture added from the humidifying section 231 to the humidifying section 236 is, for example, preferably 0.1 parts by mass or more and 20 parts by mass or less with respect to 100 parts by mass of the material before humidification. Thereby, the content of moisture contained in the molding raw material in the process of producing the molded product can be reduced, and while obtaining the effects of preventing scattering of the molding raw material, preventing static electricity, and the like, energy and time required for dehydration, drying, and the like can be sufficiently reduced.

The molding section 20 is disposed on the downstream of the second web forming section 19. The molding section 20 is a part that performs the sheet forming step of forming the sheet S from the second web M8 that is a molding raw material. The molding section 20 includes a pressurizing section 201 and a heating section 202.

The pressurizing section 201 has a pair of calendar rollers 203, and can pressurize the second web M8 between the calendar rollers 203 without heating. Thereby, a density of the second web M8 is increased. This second web M8 is transported toward the heating section 202. One of the pair of calendar rollers 203 is a driving roller driven by an operation of a motor (not shown), and the other is a driven roller.

The heating section 202 has a pair of heating rollers 204, and can pressurize the second web M8 between the heating rollers 204 while heating the second web M8. By these heating and pressurization, the thermoplastic starch is melted in the second web M8, and the fibers are bound with each other through the melted thermoplastic starch. Thereby, the sheet S is formed. The sheet S is transported toward the cutting section 21. One of the pair of heating rollers 204 is a driving roller driven by an operation of a motor (not shown), and the other is a driven roller.

The cutting section 21 is disposed on the downstream of the molding section 20. The cutting section 21 is a part that performs the cutting step of cutting the sheet S. The cutting section 21 includes a first cutter 211 and a second cutter 212.

The first cutter 211 cuts the sheet S in a direction intersecting the transportation direction of the sheet S, particularly in a direction orthogonal to the transportation direction.

The second cutter 212 cuts the sheet S in a direction parallel to the transportation direction of the sheet S on the downstream of the first cutter 211. With this cutting, unnecessary portions at both ends in the width direction of the sheet S are removed to adjust the width of the sheet S, and the cut-removed portions are so-called "edges".

In this way, the sheet S having a desired shape and size can be obtained by cutting the sheet S with the first cutter 211 and the second cutter 212. Then, the sheet S is further transported to the downstream and stock in the stock section 22.

The molding section 20 is not limited to the above described configuration to mold the sheet S, and for example, configurations to form the molded product into a block shape, a spherical shape, or the like may be employed.

Each section included in the molded product producing device 100 is electrically coupled to the control section 28 described later. An operation of each of these sections is controlled by the control section 28.

Although the preferred embodiment of the present disclosure is described above, the present disclosure is not limited thereto.

For example, each section constituting the molded product producing device used for producing the molded product can be replaced with any constitution capable of exhibiting the same function. Furthermore, any components may be added.

In the above-described embodiment, in the method for producing a molded product using the molded product producing device, it was described that the fiber raw material containing the thermoplastic starch is used, and in the mixing section, the fine fragment material obtained from the defibrated material of the fiber raw material is mixed with the thermoplastic starch supplied from the additive agent supplying section. However, when the fiber raw material containing the thermoplastic starch is used, there is not always necessary to add the thermoplastic starch during the production of the molded product, and the additive agent supplying section can be omitted. Accordingly, the fragmenting section, the mixing section, the dispersing section, the second web forming section, and the like can be omitted, and the first web may be directly supplied to the molding section.

The method for producing a molded product of the present disclosure may include the above described molding raw material preparing step, and molding step. Furthermore, a molded product producing device is not limited to the above described molded product producing device, and any devices may be used.

### Examples

### 4. Preparation of thermoplastic starch

Next, specific examples of the present disclosure will be described.

### Preparation Example 1

12.0 parts by mass of a starch having a weight-average molecular weight of 140,000 (NSP-B1 manufactured by NIPPON STARCH CHEMICAL CO., LTD.) and 2.0 parts by mass of glycerin as an external plasticizer are mixed with a kneader (LABO PLASTOMILL µ manufactured by Toyo Seiki Seisaku-sho, Ltd.) to prepare a thermoplastic starch. An average particle size of the thermoplastic starch obtained in this way was 10 µm.

### Preparation Examples 2 to 8

Thermoplastic starches were prepared in the same manner as in Preparation Example 1, except that kinds of external plasticizers and mixing ratios of starches and external plasticizers were set as illustrated in Table 1.

Conditions for the thermoplastic starches obtained in respective Preparation Examples are summarized and illustrated in Table 1.

**Table 1**

| | Starch | External plasticizer | | Average particle size [µm] | Melting temperature [°C] |
|---|---|---|---|---|---|
| | Content [% by mass] | Kinds | Content [% by mass] | | |
| Preparation Example 1 | 85.7 | Glycerin | 14.3 | 10 | 112 |
| Preparation Example 2 | 80.0 | Glycerin | 20.0 | 10 | 104 |
| Preparation Example 3 | 70.6 | Glycerin | 29.4 | 10 | 94 |
| Preparation Example 4 | 60.0 | Glycerin | 40.0 | 10 | 77 |
| Preparation Example 5 | 80.0 | Sorbitol | 20.0 | 10 | 118 |
| Preparation Example 6 | 80.0 | Lactitol | 20.0 | 10 | 124 |
| Preparation Example 7 | 80.0 | Polyvinyl alcohol | 20.0 | 10 | 138 |
| Preparation Example 8 | 80.0 | Glycerin/sorbitol | 5.0/15.0 | 10 | 110 |

### 5. Production of composite and molded product

### Example A1

The sheet S as a molded product was produced by using the molded product producing device 100 as illustrated in FIG. 2 as follows.

First, as the fiber raw material M1, a plurality of G80s (manufactured by Mitsubishi Paper Mills Limited) made of cellulose fibers were prepared, the plurality of G80s were accommodated in an accommodating section of the sheet supply device 11, and the thermoplastic starch prepared in Preparation Example 1 was accommodated in the housing section 170 of the additive agent supplying section 171. Then, as described above, the molded product producing device 100 was operated.

As a result, in the mixing section 17, the cellulose fibers and the thermoplastic starch were mixed at a predetermined ratio, and the mixture M7 as a composite containing the cellulose fibers and the thermoplastic starch was obtained.

The mixture M7 obtained in the mixing section 17 passed through the dispersing section 18 and became the second web M8 as a composite containing the cellulose fibers and the thermoplastic starch in the second web forming section 19.

The second web M8 was heated and pressurized by the molding section 20 to be the sheet S that is a long molded product. The heating temperature at the molding section 20 was 150°C, the heating time was 15 seconds, and the pressurization at the molding section 20 was performed at 70 MPa.

The sheet S that is a long molded product obtained in this way was cut by the cutting section 21 to be the sheet S having an A4 size.

### Examples A2 to A13

A composite and a molded product were produced in the same manner as in Example A1, except that kinds of thermoplastic starches, mixing ratios of the thermoplastic starches and the cellulose fibers in the mixing section, heating and pressurizing conditions were set as illustrated in Table 2.

### Comparative Example A1

A molded product was produced in the same manner as in Example A1, except that the thermoplastic starch was not supplied from the additive agent supplying section 171. The molded product of the present Comparative Example obtained in this way consisted of only cellulose fibers and did not contain the thermoplastic starch.

### Comparative Example A2

A molded product was produced in the same manner as in Example A1, except that the starch (NSP-B1 manufactured by NIPPON STARCH CHEMICAL CO., LTD.) was used instead of the thermoplastic starch supplied from the additive agent supplying section 171. The molded product of the present Comparative Example obtained in this way consisted of the cellulose fibers and the starch and did not contain the thermoplastic starch.

Configurations of the molded products of respective Examples and Comparative Examples and production conditions of the molded products are summarized in Table 2. In each case of Examples and Comparative Examples described above, the maximum content of moisture contained in the molding raw material in the process of producing the molded product was 0.2% by mass or more and 10% by mass or less. The fibers contained in the molded product obtained in each case of Examples and Comparative Examples had an average length of 0.1 mm or higher and 50 mm or lower, and an average thickness of 0.005 mm or higher and 0.5 mm or lower.

**Table 2**

| | Constitution of molded product | | | | | Heating and pressurizing condition | | |
|---|---|---|---|---|---|---|---|---|
| | Cellulose fiber | Thermoplastic starch | | Thickness [mm] | Density [g/m³] | Heating temperature [°C] | Heating time [seconds] | Pressure [MPa] |
| | Content [% by mass] | Kinds | Content [% by mass] | | | | | |
| Example A1 | 86.0 | Preparation Example 1 | 14.0 | 0.1 | 0.8 | 150 | 15 | 60 |
| Example A2 | 85.0 | Preparation Example 2 | 15.0 | 0.1 | 0.8 | 150 | 15 | 60 |
| Example A3 | 83.0 | Preparation Example 3 | 17.0 | 0.1 | 0.8 | 150 | 15 | 60 |
| Example A4 | 80.0 | Preparation Example 4 | 20.0 | 0.1 | 0.8 | 150 | 15 | 60 |
| Example A5 | 97.5 | Preparation Example 2 | 2.5 | 0.1 | 0.8 | 150 | 15 | 60 |
| Example A6 | 95.0 | Preparation Example 2 | 5.0 | 0.1 | 0.8 | 150 | 15 | 60 |
| Example A7 | 90.0 | Preparation Example 2 | 10.0 | 0.1 | 0.8 | 150 | 15 | 60 |
| Example A8 | 80.0 | Preparation Example 2 | 20.0 | 0.1 | 0.8 | 150 | 15 | 60 |
| Example A9 | 75.0 | Preparation Example 2 | 25.0 | 0.1 | 0.8 | 150 | 15 | 60 |
| Example A10 | 85.0 | Preparation Example 5 | 15.0 | 0.1 | 0.8 | 150 | 15 | 60 |
| Example A11 | 85.0 | Preparation Example 6 | 15.0 | 0.1 | 0.8 | 150 | 15 | 60 |
| Example A12 | 85.0 | Preparation Example 7 | 15.0 | 0.1 | 0.8 | 150 | 15 | 60 |
| Example A13 | 80.0 | Preparation Example 8 | 15.0 | 0.1 | 0.8 | 150 | 15 | 60 |
| Comparative Example A1 | 100 | - | - | 0.1 | 0.8 | 150 | 15 | 60 |
| Comparative Example A2 | 86.0 | Non-thermoplastic starch | 14.0 | 0.1 | 0.8 | 150 | 15 | 60 |

### 6. Evaluation

The following evaluations were performed on the molded products of respective Examples and Comparative Examples.

### 6-1. Specific tensile strength

The molded products of respective Examples and Comparative Examples were measured according to JIS P8113 using AUTOGRAP AGC-X 500N (manufactured by Shimadzu Corporation), and specific tensile strengths thereof were determined and evaluated according to the following criteria.
A: Specific tensile strength is 25 N·m/g or higher.
B: Specific tensile strength is 20 N·m/g or higher and lower than 25 N·m/g.
C: Specific tensile strength is 15 N·m/g or higher and lower than 20 N·m/g.
D: Specific tensile strength is lower than 15 N·m/g.

These results are summarized in Table 3.

**Table 3**

| | Specific tensile strength |
|---|---|
| Example A1 | B |
| Example A2 | A |
| Example A3 | A |
| Example A4 | C |
| Example A5 | C |
| Example A6 | C |
| Example A7 | B |
| Example A8 | B |
| Example A9 | C |
| Example A10 | A |
| Example A11 | B |
| Example A12 | A |
| Example A13 | B |
| Comparative Example A1 | D |
| Comparative Example A2 | D |

As is clear from Table 3, excellent results were obtained in respective Examples. On the other hand, in respective Comparative Examples, satisfactory results were not obtained.

### 7. Production of molded product using sheet S as raw material for molded product

### Example B1

The sheet S as a molded product was produced in the same manner as in Example A1, except that the sheet S produced in Example A1 was used as the fiber raw material M1, and the thermoplastic starch was not supplied from the additive agent supplying section 171. Examples B2 to B13

Sheet S as a molded product were produced in the same manner as in Example B1, except that the sheets S produced in Examples A2 to A13 were used as the fiber raw material M1 respectively, instead of the sheet S produced in Example A1.

### Comparative Examples B1 and B2

Sheets S as a molded product were produced in the same manner as in Example B1, except that the sheets S produced in Comparative Examples A1 and A2 were used as the fiber raw material M1 respectively, instead of the sheet S produced in Example A1.

The molded product obtained in each case of Examples B1 to B13 and Comparative Examples B1 and B2 contained no components other than constituting materials of the fiber raw material M1. The fibers contained in the molded product obtained in each case of Examples B1 to B13 and Comparative Examples B1 and B2 had an average length of 0.1 mm or higher and 10 mm or lower, and an average thickness of 10 µm or higher and 100 µm or lower. In each case of Examples B1 to B13 and Comparative Examples B1 and B2 described above, the maximum content of moisture contained in the molding raw material in the process of producing the molded product was 0.2% by mass or more and 10% by mass or less.

### 8. Evaluation

The following evaluations were performed on the molded products obtained in Examples B1 to B13 and Comparative Examples B1 and B2.

### 8-1. Specific tensile strength

The molded products of Examples B1 to B13 and Comparative Examples B1 and B2 were measured according to JIS P8113 using AUTOGRAP AGC-X 500N (manufactured by Shimadzu Corporation), and specific tensile strengths thereof were determined and evaluated according to the following criteria.
A: Specific tensile strength is 20 N·m/g or higher.
B: Specific tensile strength is 15 N·m/g or higher and lower than 20 N·m/g.
C: Specific tensile strength is 10 N·m/g or higher and lower than 15 N·m/g.
D: Specific tensile strength is lower than 10 N·m/g.

These results are summarized in Table 4.

**Table 4**

| | Specific tensile strength |
|---|---|
| Example B1 | C |
| Example B2 | A |
| Example B3 | A |
| Example B4 | C |
| Example B5 | C |
| Example B6 | C |
| Example B7 | B |
| Example B8 | B |
| Example B9 | C |
| Example B10 | A |
| Example B11 | B |
| Example B12 | B |
| Example B13 | A |
| Comparative Example B1 | D |
| Comparative Example B2 | D |

As is clear from Table 4, excellent results were obtained in Examples B1 to B13. On the other hand, in Comparative Examples B1 and B2, satisfactory results were not obtained.

The molded product was produced in the same manner as described above, and the same evaluation as described above was performed, except that a value of T_{1/2} - Tₕ when the heating temperature in the molding step was variously changed in a range of 60°C or higher and 180°C or lower, and the heating temperature in the molding step was Tₕ [°C] and the melting temperature of the thermoplastic starch was T_{1/2} [°C] is changed in a range of -30°C or higher and 30°C or lower, and the pressurization in the molding step is changed in a range of 0.1 MPa or higher and 100 MPa or lower, the same result as described above was obtained.

## Claims

1. A composite comprising:
a fiber; and
a thermoplastic starch fused to the fiber.

2. The composite according to claim 1, wherein a content of the thermoplastic starch contained in the composite with respect to the composite is 1.5% by mass or more and 40.0% by mass or less.

3. The composite according to claim 1, wherein the thermoplastic starch contains a starch and an external plasticizer.

4. The composite according to claim 3, wherein the external plasticizer contains at least one of a polyhydric alcohol, a polyvalent amine, or a polyvalent carboxylic acid.

5. The composite according to claim 3, wherein a content of the external plasticizer in the thermoplastic starch is 12% by mass or more and 50% by mass or less.

6. The composite according to claim 1, wherein a melting temperature of the thermoplastic starch is 80°C or higher and 180°C or lower.

7. The composite according to claim 1, wherein the fiber is formed of a substance containing at least one chemical structure of a hydroxyl group, a carbonyl group, or an amino group.

8. The composite according to claim 1, wherein the fiber is a cellulose fiber.

9. A molded product comprising the composite according to claim 1.

10. The molded product according to claim 9, wherein the molded product is formed in a sheet shape.

11. A method for producing a molded product, the method comprising:
a molding raw material preparing step of preparing a molding raw material containing a fiber and a thermoplastic starch; and
a molding step of molding the molding raw material into a predetermined shape by heating and pressurizing the molding raw material.

12. A method for producing a molded product comprising:
a molding raw material preparing step of preparing a molding raw material containing the composite according to claim 1; and
a molding step of molding the molding raw material into a predetermined shape by heating and pressurizing the molding raw material.

13. The method for producing a molded product according to claim 12, wherein the molding raw material contains a defibrated material of a sheet-shaped composite containing the fiber and the thermoplastic starch.

14. The method for producing a molded product according to claim 11, wherein a heating temperature in the molding step is 60°C or higher and 180°C or lower.

15. The method for producing a molded product according to claim 11, wherein a maximum content of moisture contained in the molding raw material in a process of producing the molded product is 25% by mass or less.
